# EUROPÄISCHE PATENTANMELDUNG

(11) **EP 4 223 722 A1**
(43) Veröffentlichungstag der Anmeldung: **09.08.2023**
(21) Anmeldenummer: 22155255.7
(22) Anmeldetag: 04.02.2022
(51) Int. Cl.: C04B 28/14, C04B 28/16, C04B 111/60, C04B 111/62

(54) **SCHNELL TROCKNENDE ESTRICH-LEICHTSCHÜTTUNG**

(71) Anmelder: Sika Technology AG, 6340 Baar (CH)
(72) Erfinder: WIELING, Sascha, 48720 Rosendahl (DE); FISCHEDICK, Jens, 48720 Rosendahl (DE); SCHRÖDER, Philipp, 48727 Billerbeck (DE); SCHNEIDER, Nick, 48727 Billerbeck (DE)
(74) Vertreter: Sika Patent Attorneys

(57) **Zusammenfassung**

Die vorliegende Erfindung betrifft eine ein- oder zweikomponentige Mörtelzusammensetzung, umfassend i) ein Aluminat-Bindemittel, ii) ein Calciumsulfat-Bindemittel, iii) einen oder mehrere Füllstoffe mit einer Rohdichte von mindestens 2,0 g/cm³ und iv) einen oder mehrere anorganische Leichtfüllstoffe mit einer Rohdichte von weniger als 1,5 g/cm³, wobei die Menge an anorganischem Leichtfüllstoff 30 bis 70 Gew.-% beträgt und die Gesamtmenge an Aluminat-Bindemittel und Calciumsulfat-Bindemittel 20 bis 65 Gew.-% beträgt und das Gewichtsverhältnis von Aluminat-Bindemittel zu Calciumsulfat-Bindemittel im Bereich von 1:1 bis 1:10 liegt.

Die eingesetzte Mörtelzusammensetzung ist schnell härtend und eignet sich als Leichtschüttung zur Herstellung von Bodenkonstruktionen auf Substraten mit begrenzter Tragfähigkeit.

## Beschreibung

### Technisches Gebiet

Die vorliegende Erfindung betrifft eine Mörtelzusammensetzung auf Calciumsulfat-Basis, die für eine Leichtschüttung geeignet ist, und eine Bodenkonstruktion, die eine solche Leichtschüttung umfasst.

### Stand der Technik

Bodenkonstruktionen basieren häufig auf zementgebundenen Estrichen, die auf den vorhandenen Unterboden aufgebracht werden. Dabei kann man mit einem Substrat als Unterboden konfrontiert sein das eine relativ geringe Tragfähigkeit aufweist, z.B. bei der Fußbodensanierung.

Übliche Estriche weisen in der Regel ein relativ hohes Eigengewicht auf, so dass sie auf Unterlagen mit kritischer Tragfähigkeit nicht eingesetzt werden können. In diesen Fall werden Leichtschüttungen eingesetzt, deren Gewicht durch Einsatz von Leichtfüllstoffen wie Styropor reduziert ist.

Die Trocknung solcher zementgebundenen Systeme dauert relativ lang, so dass eine Belegreife erst nach einer längeren Zeit erreicht wird.

Bodenkonstruktionen auf Basis von Leichtschüttungen weisen zudem einen relativ komplexen Aufbau auf, die in der Regel neben dem Leichtstrich den Einbau einer Armierungslage und einer weiteren nivellierenden Estrichlage erfordern, bevor ein abschließender Bodenbelag wie z.B. Fliesen aufgebracht werden kann. Daher sind mehrere Arbeitsschritte erforderlich.

Es gibt demzufolge folgenden Probleme bei den gängigen Bodenkonstruktionen nach dem Stand der Technik auf Basis von zementgebundenen Leichtschüttungen:
- Einschränkungen bei der Arbeitsweise, z. B. zeitliche Beschränkungen für den nächsten Arbeitsschritt oder räumliche Beschränkungen
- Kurze Topfzeit
- Lange Wartezeit für Begehbarkeit
- Lange Aushärtezeit für erste Festigkeit (genügenden Biege- und Druckfestigkeit)
- Lange Trocknungszeit
- Das Aufbringen der Endschicht hängt von der Trocknungszeit der Bodenkonstruktion ab - unterschiedliche Zeiten für verschiedene Bodenbeläge (z.B. Fliesen, PVC, Parkett)
- Lange Wartezeit für den nächsten Arbeitsschritt oder der Aufbringung des Bodenbelags
- Viele verschiedene Arbeitsschritte, zum Beispiel zusätzliche Grundierung
- Nicht feuerbeständig, da Füllstoffe auf Polymerbasis (ggf. zusätzliche Schutzkonstruktion nötig)

Sogenannte binäre und ternäre Bindemittel werden zunehmend zur Formulierung von Baumaterialien verwendet, z.B. für Mörtelzusammensetzungen, die als Estriche eingesetzt werden können. Binäre Bindemittel umfassen als hydraulische Bindemittel Aluminatzement und Calciumsulfat. Ternäre Bindemittel umfassen darüber hinaus Portlandzement als drittes hydraulisches Bindemittel. Binäre und ternäre Bindemittel haben den Vorteil einer verkürzten Dauer bis zur Belegreife im Vergleich zu Normalzementen.

Beispielsweise betrifft die WO 2015/150319 A1 schnelltrocknende Gipszusammensetzungen auf Basis von Calciumaluminat und Calciumsulfat als hydraulische Bindemittel.

### Darstellung der Erfindung

Aufgabe der vorliegenden Erfindung ist die Bereitstellung einer Mörtelzusammensetzung für Leichtschüttungen, die schnell aushärtet und sich zur Herstellung von Bodenkonstruktionen auf Substraten mit relativ geringer Tragfähigkeit eignet. Insbesondere soll die Mörtelzusammensetzung auch eine Beschleunigung bei der Herstellung von Bodenkonstruktionen auf Untergründen bzw. Substraten ermöglichen, deren Tragfähigkeit begrenzt ist. Darüber hinaus soll das System gute mechanische Eigenschaften zeigen und diese auch schnell erreichen.

Die Erfinder haben festgestellt, dass diese Aufgabe gelöst werden kann, indem eine Mörtelzusammensetzung auf Basis von Aluminatzement und Calciumsulfat verwendet wird, der große Mengen eines anorganischen Leichtfüllstoffs zugesetzt werden.

Die Erfindung betrifft daher eine ein- oder zweikomponentige Mörtelzusammensetzung, umfassend
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit,
iii) einen oder mehrere Füllstoffe mit einer Rohdichte von mindestens 2,0 g/cm³ und
iv) einen oder mehrere anorganische Leichtfüllstoffe mit einer Rohdichte von weniger als 1,5 g/cm³,
wobei die Menge an anorganischem Leichtfüllstoff mit einer Rohdichte von weniger als 1,5 g/cm³ 30 bis 70 Gew.-% beträgt und die Gesamtmenge an Aluminat-Bindemittel und Calciumsulfat-Bindemittel 20 bis 65 Gew.-% beträgt, wobei das Gewichtsverhältnis von Aluminat-Bindemittel zu Calciumsulfat-Bindemittel im Bereich von 1:1 bis 1:10 liegt, wobei sich die Gewichtsangaben auf das Trockengewicht der Mörtelzusammensetzung beziehen.

Das Trockengewicht der Mörtelzusammensetzung bezieht sich dabei in dieser Anmeldung auf das Trockengewicht der Mörtelzusammensetzung insgesamt, d.h. bei einer zweikomponentigen Mörtelzusammensetzung auf das kombinierte Gesamtgewicht beider Komponenten.

Die erfindungsgemäße Mörtelzusammensetzung ist schnell härtend und eignet sich insbesondere als Leichtschüttung zur Herstellung von Bodenkonstruktionen auf Substraten mit begrenzter Tragfähigkeit. Die schnelle Härtung hat Vorteile für die Begehbarkeit und die Kraftentwicklung des Estrichs und ermöglicht eine Herstellung mit weniger Arbeitsschritten und schnellere Arbeitsabläufe. Zudem weisen die eingesetzten anorganischen Leichtfüllstoffe eine relativ hohe Festigkeit auf. Auf dieser Basis ist die typische Estrichverarbeitung sehr gut möglich.

Insbesondere ist aufgrund des schnellen Hydratationsprozesses der mit Wasser gemischten erfindungsgemäßen Mörtelzusammensetzung die Aushärtung, Festigkeitsentwicklung und der gesamte Trocknungsprozess sehr schnell. Dies ist die Voraussetzung für eine kürzere Wartezeit für den nächsten Arbeitsschritt und die endgültige Nutzung der Bodenkonstruktion.

Mit der erfindungsgemäßen Mörtelzusammensetzung ist der nächste Arbeitsschritt (Endspachtelung des Bodens, d.h. abschließende Nivellierung) bereits nach wenigen Stunden Wartezeit möglich und nicht erst nach mehr als einem Tag wie bei den Systemen nach dem Stand der Technik.

Ein weiterer Vorteil ist der Einsatz von anorganischen Leichtfüllstoffen, die im Gegensatz zu den üblicherweise eingesetzten Materialien auf organischer Polymerbasis feuerbeständig sind.

Zusammenfassend können folgende Vorteile der erfindungsgemäßen Mörtelzusammensetzung bzw. der mit Wasser gemischten und auf ein Substrat aufgebrachten Mörtelzusammensetzung (Estrich) angeführt werden:
- Nach einigen Stunden begehbar
- Schnell trocknende Eigenschaften
- Hohe und schnelle Kraftentwicklung
- Geringe Dichte
- Niedriger pH-Wert (aufgrund der gipsbasierten Technologie)
- Verkürzung der Arbeitszeit
- Nur ein Tag Arbeit für die Bodenrenovierung und die Nivellierung der endgültigen Bodenkonstruktion
- Widerstandsfähigkeit gegen Feuer durch Verwendung von mineralischem Material und anorganischen Leichtfüllstoffen, insbesondere Blähglas

Für die erfindungsgemäße Bodenkonstruktion insgesamt, die später im Einzelnen erläutert wird, ergeben sich weitere Vorteile:
- Bereit für den endgültigen Bodenbelag (Fliesen, PVC oder Parkett) nach weniger als 48 Stunden nach Beginn der Arbeiten
- Reduzierung der Arbeitsschritte, kein Primer erforderlich (Verwendung von Materialien auf Basis derselben Grundrezeptur)
- Hohe Maximalbelastungen sind möglich, daher für den Wohn- und Gewerbebereich einsetzbar
- sehr geringes Flächengewicht
- geringe Aufbauhöhe
- beliebige Schichtdicken
- geringen Verformung bei Belastung

### Wege zur Ausführung der Erfindung

Die Erfindung betrifft eine ein- oder zweikomponentige Mörtelzusammensetzung. Bei einer einkomponentigen Mörtelzusammensetzung sind alle Inhaltsstoffe in einer Komponente vereint, während bei einer zweikomponentigen Mörtelzusammensetzung die Inhaltsstoffe auf zwei Komponenten verteilt sind. Bei einer erfindungsgemäßen zweikomponentigen Mörtelzusammensetzung ist es bevorzugt, dass eine Komponente den oder die Leichtfüllstoffe enthält bzw. daraus gebildet wird, während die andere Komponente die anderen Inhaltsstoffe der Mörtelzusammensetzung enthält. Bei einer zweikomponentigen Mörtelzusammensetzung wird die das Bindemittel enthaltende Komponente bevorzugt mit Wasser gemischt, bevor die den Leichtfüllstoff enthaltende Komponente zugemischt wird.

Die einkomponentige Mörtelzusammensetzung ist bevorzugt ein Trockenmörtel. Entsprechend ist die Komponente des zweikomponentigen Mörtelzusammensetzung, die nicht den oder die Leichtfüllstoffe enthält, bevorzugt ein Trockenmörtel.

Die erfindungsgemäße ein- oder zweikomponentige Mörtelzusammensetzung umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit,
iii) einen oder mehrere Füllstoffe mit einer Rohdichte von mindestens 2,0 g/cm³ und
iv) einen oder mehrere anorganische Leichtfüllstoffe mit einer Rohdichte von weniger als 1,5 g/cm³.

Das Aluminat-Bindemittel ist Calciumaluminatzement und/oder Calciumsulfoaluminatzement. Das Aluminat-Bindemittel ist bevorzugt Calciumsulfoaluminatzement. Das Aluminat-Bindemittel ist ein hydraulisches Bindemittel.

Gemäß einer Ausführungsform enthält das Aluminat-Bindemittel mindestens einen Calciumaluminatzement (CAC). Ein Calciumaluminatzement (CAC) ist gemäß der vorliegenden Erfindung insbesondere ein Zement, umfassend einen Klinker, der hydraulische Calciumaluminate umfasst, wobei die Hauptphase bevorzugt CA (C: CaO; A: Al₂O₃) ist. Andere Calciumaluminate, wie z.B. C₂A, C₃A, C₁₂A₇, sind typischerweise ebenfalls vorhanden. CAC für die vorliegende Erfindung können typischerweise auch andere Phasen, ausgewählt aus Gehlenit (C₂AS mit C: CaO, A: Al₂O₃, S: SiO₂), Perovskit (CT mit C: CaO, T: TiO₂), Belit (C₂S mit C: CaO, S: SiO₂), Tricalciumsilicat, Ferriten (C₂F, C₂AF, C₄AF mit C: CaO; A: Al₂O₃; F: Fe₂O₃), Ternesit (C₅S₂$ mit C: CaO, S: SiO₂; $: SO₃) und Aluminumoxid, enthalten. CAC der vorliegenden Erfindung können ferner Calciumcarbonat enthalten. Insbesondere entspricht ein CAC der vorliegenden Erfindung bevorzugt der Norm EN 14647. CAC, die in anderen Normen beschrieben werden, z.B. ASTM oder chinesische Normen, sind in gleicher Weise geeignet. Geeignete CAC können z.B. kommerziell von Royal White Cement bezogen werden.

Gemäß einer Ausführungsform enthält das Aluminat-Bindemittel mindestens einen Calciumsulfoaluminat (CSA)-Zement. Ein CSA-Zement ist gemäß der vorliegenden Erfindung insbesondere ein Zement, umfassend einen Klinker, der C₄(A₃₋ₓFₓ)$ (C: CaO; A: Al₂O₃; F: Fe₂O₃; $: SO₃), wobei x eine ganze Zahl von 0 - 3 ist, umfasst. CSA für die vorliegende Erfindung können typischerweise weitere Phasen enthalten, die ausgewählt sind aus Aluminaten (CA, C₃A, C₁₂A₇, mit C: CaO; A: Al₂O₃), Belit (C₂S, mit C: CaO, S: SiO₂), Ferriten (C₂F, C₂AF, C₄AF, mit C: CaO; A: Al₂O₃; F: Fe₂O₃), Ternesit (C₅S₂$ mit C: CaO, S: SiO₂; $: SO₃) und Anhydrit. In bestimmten Ausführungsformen der Erfindung enthält der CSA 15-75 Gew.-% C₄A₃$, 0-10 Gew.-% Aluminate, 0-70 Gew.-% Belit, 0-35 Gew.-% Ferrite, 0-20 Gew.-% Ternesit und 0-25 Gew.-% Anhydrit, jeweils bezogen auf das Gesamttrockengewicht des CSA-Zements. Gegebenenfalls enthaltenes Anhydrit ist Bestandteil des CSA-Zements und diesem zuzurechnen. Geeignete CSA können z.B. unter dem Handelsnamen Calumex von Caltra B.V. bezogen werden.

Das Calciumsulfat-Bindemittel ist ein hydraulisches Bindemittel. Das Calciumsulfat-Bindemittel ist ausgewählt aus Calciumsulfat-Hemihydrat (CaSO₄ · ½ H₂O) und/oder Calciumsulfat-Anhydrit (CaSO₄), wobei Calciumsulfat-Hemihydrat bevorzugt ist. Calciumsulfat-Anhydrit ist wasserfreies Calciumsulfat (kein Kristallwasser). Calciumsulfat-Hemihydrat umfasst alpha-Calciumsulfat-Hemihydrat und beta-Calciumsulfat-Hemihydrat, wobei alpha-Calciumsulfat-Hemihydrat bevorzugt ist.

In Bezug auf die Calciumsulfat-Bindemittel ist es bevorzugt, wenn es im Wesentlichen oder vollständig aus Calciumsulfat-Hemihydrat besteht, da ein zu hoher Anteil an Anhydrit zu einer zu schnellen Wasseraufnahme durch den Anhydritbestandteil führt, was die Verarbeitbarkeit der Zusammensetzung beeinträchtigen kann. Infolgedessen ist es bevorzugt, wenn von der Gesamtmenge an Calciumsulfat-Bindemittel mindestens 80 Gew.-%, bevorzugt mindestens 90 Gew.-%, und besonders bevorzugt mindestens 95 Gew.-% auf das Calciumsulfat-Hemihydrat entfallen (Rest Calciumsulfat-Anhydrit).

Calciumsulfat-Dihydrat (CaSO₄ · 2 H₂O) ist nicht in der Lage, Wasser zu binden, und fällt daher hier nicht unter das Calciumsulfat-Bindemittel. In der Mörtelzusammensetzung kann aber gegebenenfalls auch Calciumsulfat-Dihydrat enthalten sein. Calciumsulfat-Dihydrat kann als sogenannter Anreger ("nucleating agent") dienen und bewirkt eine schnellere Reaktion des Calciumsulfat-Halbhydrats. Die Mörtelzusammensetzung umfasst daher bevorzugt Calciumsulfat-Dihydrat.

Die erfindungsgemäße Mörtelzusammensetzung enthält ferner einen oder mehrere anorganische Leichtfüllstoffe mit einer Rohdichte von weniger als 1,5 g/cm³. Die Leichtfüllstoffe sind aus einem anorganischen Material, z.B. aus Glas oder einem mineralischen Material, welches in der Regel Poren enthält oder ein Hohlkörper darstellt.

Die Rohdichte eines Partikelmaterials wie Füllstoffe ist das Verhältnis zwischen der Masse des Partikelmaterials und dem von den einzelnen Partikeln eingenommenen Volumen. Dieses Volumen umfasst die Poren innerhalb der Partikel (inneres Porenvolumen), nicht aber die Hohlräume zwischen den Partikeln. Im Gegensatz zur Schüttdichte sind somit bei der Rohdichte die Zwischenräume zwischen den Partikeln des Materials nicht berücksichtigt. Die in dieser Anmeldung angegebenen Rohdichten beziehen sich auf eine Temperatur von 20 °C. Die Rohdichte kann gemäß der Norm EN 1097-6 - 2013 bestimmt werden.

Der oder die anorganischen Leichtfüllstoffe, z.B. die nachstehend genannten Beispiele, insbesondere Blähglas, weisen eine Rohdichte von weniger als 1,5 g/cm³, bevorzugt weniger als 1,0 g/cm³, bevorzugter weniger als 0,6 g/cm³, besonders bevorzugt weniger als 0,5 g/cm³, auf. Im Allgemeinen beträgt die Rohdichte bevorzugt mindestens 0,05 g/cm³, bevorzugter mindestens 0,1 g/cm³.

Beispiele für geeignete anorganischen Leichtfüllstoffe mit den vorstehend genannten Rohdichten sind ausgewählt aus Blähglas, Glashohlkugeln, Schaumglasschotter, Aluminiumsilikat-Hohlkugeln, Bims, Blähton, Blähschiefer, Blähperlit, recyclierter Gesteinskörnung, z.B. von Leichtbeton oder Porenbeton, nicht geblähten Perliten, silikatischen Mikrohohlkugeln oder Kombinationen davon, bevorzugt Blähglas, Bims, Blähperlit, Blähton, Blähschiefer oder Kombinationen davon.

In einer bevorzugten Ausführungsform ist der oder die anorganischen Leichtfüllstoffe mit einer Rohdichte von weniger als 1,5 g/cm³ Blähglas.

Der oder die anorganischen Leichtfüllstoffe, z.B. die vorstehend genannten Beispiele, insbesondere Blähglas, weisen bevorzugt eine mittlere Korngröße im Bereich von 0,05 bis 16 mm, bevorzugt 0,5 bis 10 mm, bevorzugter 1 bis 7 mm, besonders bevorzugt 2 bis 4 mm, auf. Dies gilt für alle der vorstehend genannten Rohdichten bzw. bevorzugten Rohdichten.

Die Ausdrücke Korngröße und Partikelgröße oder Teilchengröße werden hier synonym verwendet. Die Korngröße oder Partikelgröße bezieht sich hier auf die mittlere Korngröße bzw. Partikelgröße, sofern nicht anders angegeben. Die mittlere Korngröße entspricht insbesondere dem D50-Wert (50% der Partikel sind kleiner als der angegebene Wert, 50% sind entsprechend größer).

Die Partikelgröße feiner Partikel mit einer Partikelgröße bis 3,5 mm kann mittels Laserbeugung gemessen werden, wie in ISO 13320:2009 beschrieben. Insbesondere wird ein Mastersizer 2000 Gerät mit einer Hydro 2000G Dispergiereinheit und die Mastersizer 2000 Software von Malvern Instruments GmbH (Deutschland) verwendet. Als Messmedium eignet sich z.B. Isopropanol. Vorzugsweise wird die Partikelgröße von nicht kugelförmigen oder unregelmäßigen Partikeln durch den äquivalenten Kugeldurchmesser einer Kugel mit gleichem Volumen dargestellt.

Die Partikelgröße grober Partikel mit einer Partikelgröße über 3,5 mm kann durch eine Siebanalyse, wie sie z. B. in der Norm ASTM C136/C136M beschrieben ist, bestimmt werden. Bei diesem Verfahren werden Partikel unterschiedlicher Größe getrennt, indem das Material durch eine Reihe von Sieben mit unterschiedlichen Maschenweiten gesiebt wird. Das zu analysierende Material wird mit einer einzigen oder einer Kombination aus horizontaler, vertikaler oder rotierender Bewegung durch eine Reihe von nacheinander abnehmenden Sieben geschüttelt. Das Ergebnis ist der prozentuale Anteil der Partikel, die durch ein Sieb einer bestimmten Größe hindurchgehen. Die Siebanalyse eignet sich prinzipiell auch für die Bestimmung der Partikelgröße von Partikeln unter 3,5 mm.

Es können auch Sieblinien aus zwei oder mehr anorganischen Leichtfüllstoffen mit einer Rohdichte von weniger als 1,5 g/cm³ mit unterschiedlicher Partikelgrößenverteilung eingesetzt werden, wobei die Leichtfüllstoffe vom gleichen oder unterschiedlichen Typ sein können. Mit solchen Mischungen können u.a. die Festigkeit der Mörtelzusammensetzung und andere Eigenschaften, die auf die Verarbeitung zurückgehen, beeinflusst werden.

Die anorganischen Leichtfüllstoffe mit einer Rohdichte von weniger als 1,5 g/cm³ erfüllen bevorzugt die Anforderungen an Leichtfüllstoffe nach DIN EN 13055:2016.

Die Partikel der anorganischen Leichtfüllstoffe mit einer Rohdichte von weniger als 1,5 g/cm³ können jede beliebige kugelförmige und/oder nicht kugelförmige geometrische Form haben, entweder gleichförmig oder ungleichförmig. Die Partikel können beispielsweise kugelförmig, kegelförmig, polygonal, kubisch, fünfeckig, sechseckig, achteckig, prismatisch und/oder polyedrisch geformt sein. Nicht gleichförmige Partikel können beispielsweise kreisförmige, elliptische, ovale, quadratische, rechteckige, dreieckige oder polygonale Querschnitte aufweisen, die sich zumindest teilweise in ihnen befinden. "Ungleichförmige" und "unregelmäßig" geformte Partikel beziehen sich auf dreidimensionale Partikelformen, bei denen mindestens zwei verschiedene Querschnitte durch die Partikel unterschiedliche Formen aufweisen. Für die geometrische Form der Partikel der nachstehend beschriebenen Füllstoffe mit einer Rohdichte von mindestens 2,0 g/cm³ gilt dasselbe.

Die Mörtelzusammensetzung enthält ferner einen oder mehrere Füllstoffe mit einer Rohdichte von mindestens 2,0 g/cm³, die auch als Aggregate bezeichnet werden, wobei die Rohdichte des oder der Füllstoffe bevorzugt mindestens 2,2 g/cm³ beträgt.

Als Füllstoffe mit einer Rohdichte von mindestens 2,0 g/cm³, bevorzugt mindestens 2,2 g/cm³, können die dem Fachmann auf dem Gebiet bekannten Stoffe eingesetzt werden. Beispiele sind Gestein, Schotter, Kies, Schlacke, gemahlenes Gestein, recyclierte Gesteinskörnung, Recyclingbeton, Sand, wie Quarzsand oder Flusssand, gemahlenes Gestein, Glas, Glaskeramik, Porzellan, elektrogeschmolzene oder gesinterte Schleifmittel, Brennhilfsmittel, Siliciumdioxid, Carbonate, wie gemahlener Kalkstein, gemahlener Dolomit und Kreide, und/oder gemahlenes Aluminiumoxid.

Es können feste Materialien verwendet werden, für die nach (Wieder)verwertungsmöglichkeiten gesucht wird. Beispiele für solche Füllstoffe bzw. Aggregate mit einer Rohdichte von mindestens 2,0 g/cm³ sind die Folgenden, sofern sie eine Rohdichte von mindestens 2,0 g/cm³ aufweisen:
(i) Materialien biologischen Ursprungs, bevorzugt pflanzlichen Ursprungs, insbesondere Materialien pflanzlichen Ursprungs, die im Wesentlichen aus Cellulose und/oder Lignin bestehen.
(ii) anorganische Aggregate aus dem Rückbau von Bauwerken des Hoch- und Tiefbaus, vorzugsweise ausgewählt aus Betonabfällen, Mörtel, Ziegel, Naturstein, Asphalt, Fliesen, Kacheln, Klinker, Metallschrott
(iii) gesundheitlich unbedenkliche körnige Materialien, die üblicherweise zur Deponierung bestimmt sind, wie z.B. gebrauchte Gießereisande, Katalysatorträger, Klinkerzuschläge, Füllstoffe aus der Behandlung von Aushubschlamm, Klärschlamm, Gülle, Papierabfälle,

Papierverbrennungsaschen, Hausmüllverbrennungsaschen.

In einer bevorzugten Ausführungsform umfassen oder sind der bzw. die Füllstoffe mit einer Rohdichte von mindestens 2,0 g/cm³ Sand und/oder Carbonat, insbesondere in Form von Calciumcarbonat. Geeignete Sande sind zum Beispiel in den Normen ASTM C778 oder EN 196-1 beschrieben. Calciumcarbonat umfasst auch Kalkstein bzw. Kalksteinmehl und Kreide. Der Sand kann insbesondere Quarzsand oder Flusssand sein.

Ein geeigneter Quarzsand weist z.B. eine Sieblinie im Bereich von etwa 0 bis 0,5 mm, bevorzugt im Bereich von etwa 0,08 bis 0,4 mm, auf. Ein weiterer geeigneter Quarzsand weist z.B. eine Partikelgröße im Bereich von etwa 0,1 bis 1 mm, bevorzugt von etwa 0,2 bis 0,8 mm auf.

Ein geeignetes Calciumcarbonat weist z.B. einen mittleren Teilchendurchmesser im Bereich von etwa 3 µm und eine Kornlinie mit Rückstandsfreiheit von etwa 40 µm auf. Ein geeignetes Kalksteinmehl weist z.B. eine Feinheit von < 0,1 mm auf.

Im Folgenden beziehen sich auf die erfindungsgemäße ein- oder zweikomponentige Mörtelzusammensetzung bezogene Gewichtsangaben auf das Trockengewicht der Mörtelzusammensetzung insgesamt, sofern nicht anders angegeben.

Die Gesamtmenge an Aluminat-Bindemittel und Calciumsulfat-Bindemittel in der erfindungsgemäßen Mörtelzusammensetzung beträgt 20 bis 65 Gew.-%, bevorzugt 20 bis 60 Gew.-%, bevorzugter 35 bis 55 Gew.-%, bezogen auf das Trockengewicht der Mörtelzusammensetzung.

Das Gewichtsverhältnis von Aluminat-Bindemittel zu Calciumsulfat-Bindemittel in der Mörtelzusammensetzung liegt im Bereich von 1:1 bis 1:10, bevorzugt im Bereich von 1:1 bis 1:5, bevorzugter 1:1 bis 1:3,5.

Der Gehalt an anorganischem Leichtfüllstoff mit einer Rohdichte von weniger als 1,5 g/cm³, bevorzugt mit einer Rohdichte von weniger als 1,0 g/cm³, bezogen auf das Trockengewicht der Mörtelzusammensetzung, beträgt 30 bis 70 Gew.-%, bevorzugt 35 bis 65 Gew.-%, bevorzugter 40 bis 60 Gew.-%.

Der Gehalt an Füllstoff mit einer Rohdichte von mindestens 2,0 g/cm³, bevorzugt mindestens 2,2 g/cm³, bezogen auf das Trockengewicht der Mörtelzusammensetzung, kann z.B. 2 bis 20 Gew.-%, bevorzugt 4 bis 15 Gew.-%, bezogen auf das Trockengewicht der Mörtelzusammensetzung, betragen.

In einer bevorzugten Ausführungsform umfasst die erfindungsgemäße Mörtelzusammensetzung:
i) 8 bis 20 Gew.-% des Aluminat-Bindemittels,
ii) 20 bis 50 Gew.-% des Calciumsulfat-Bindemittels und
iii) 35 bis 65 Gew.-% des oder der anorganischen Leichtfüllstoffe mit einer Rohdichte von weniger als 1,5 g/cm³, bevorzugt weniger als 1,0 g/cm³.

In einer bevorzugten Ausführungsform kann die Mörtelzusammensetzung ferner mindestens ein Lithiumsalz umfassen, das die Härtung der Zusammensetzung beschleunigt. Geeignete Lithiumsalze sind z.B. Lithiumsulfat und Lithiumhalogenide, insbesondere Lithiumchlorid, sowie Lithiumcarbonat. Am meisten bevorzugt ist Lithiumcarbonat.

Das Lithiumsalz, insbesondere Lithiumcarbonat oder Lithiumsulfat, ist bevorzugt in einer Menge von 0,001 bis 0,5 Gew.-%, bevorzugter 0,003 bis 0,05 Gew.-%, in der Mörtelzusammensetzung enthalten. Bei weniger als 0,001 % ist die Konzentration in der Regel zu gering, um eine merklich beschleunigende Wirkung zu vermitteln, während ein Zusatz von mehr als 0,5 Gew.-% zu einer zu schnellen Härtung der Zusammensetzung führen kann und/oder keinerlei zusätzlicher Wirkung zeigt und das Additiv mehr als Füllstoff wirkt.

In einer bevorzugten Ausführungsform kann die Mörtelzusammensetzung ferner Weinsäure und/oder ein Weinsäuresalz enthalten, bevorzugt ein Alkalimetallsalz der Weinsäure, bevorzugt in einer Menge von 0,15 bis 0,005 Gew.-%, bevorzugter 0,1 bis 0,01 Gew.-%. Bevorzugt ist Natrium- oder Kaliumtartrat oder das Mischsalz Natrium/Kaliumtartrat.

Der Zusatz von Weinsäure und/oder einem Weinsäuresalz hat positive Auswirkungen auf das Expansionsverhalten der Mörtelzusammensetzung, indem eine zu starke Expansion des Materials unterdrückt werden kann. Um einen entsprechenden Effekt zu erzielen, werden im Allgemeinen mindestens 0,005 Gew.-% eingesetzt, während mehr als 0,15 Gew.-% zu einer zu starken Verzögerung der Abbindung führen können.

Weitere geeignete Verzögerer, die alternativ oder zusätzlich zu der Weinsäure und/oder dem Weinsäuresalz zugesetzt werden können, sind Glukonate, insbesondere Natriumglukonat, oder Zitronensäure und/oder ein Zitronensäuresalz, z.B. Natriumzitrat.

In einer bevorzugten Ausführungsform kann die Mörtelzusammensetzung ferner mindestens ein Fließmittel enthalten. Es können die auf dem Gebiet üblichen Fließmittel verwendet werden. Besonders geeignete Fließmittel sind Polycarboxylatether (PCE), die auch als "Superplasticizer" bezeichnet werden. Der Polycarboxylatether weist bevorzugt Polyethylenglykol-Seitenketten auf.

Der Gehalt an Fließmittel, insbesondere Polycarboxylatether, in der Mörtelzusammensetzung liegt bevorzugt im Bereich von 0,005 bis 0,5 Gew.-%, bevorzugter 0,01 bis 0,1 Gew.-%.

Die erfindungsgemäße Mörtelzusammensetzung kann somit in einer bevorzugten Ausführungsform ferner mindestens ein Additiv ausgewählt aus einem Lithiumsalz, mindestens einem Verzögerer ausgewählt aus einem von Weinsäure oder einem Weinsäuresalz, einem Glukonat, insbesondere Natriumglukonat, und Zitronensäure oder einem Zitronensäuresalz, einem Fließmittel, wobei das Fließmittel bevorzugt ein Polycarboxylatether ist, oder einer Kombination davon umfassen. Diese Additive sind vorstehend beschrieben. In einer besonders bevorzugten Ausführungsform umfasst die Mörtelzusammensetzung ein Lithiumsalz, Weinsäure oder ein Weinsäuresalz und ein Fließmittel, bevorzugt einen Polycarboxylatether.

Die Mörtelzusammensetzung kann neben den genannten Additiven ferner ein oder mehrere weitere Additive enthalten, z.B. Verdickungsmittel, Farbstoffe und/oder Farbpigmente, Härtungsverzögerer, Stabilisierungsmittel, Entschäumer, Schwindreduzierer und/oder Flexibilisierungsmittel.

Beispiele für geeignete Flexibilisierungsmittel sind organische Polymere, z.B. auf Basis von Vinylacetat und Ethylen, die z.B. als Vinnapas^{®}5025 L von Wacker erhältlich sind. Ein geeigneter Verzögerer ist z.B. unter dem Handelsnamen Retardan^{®} P von der Sika Schweiz AG erhältlich. Beispiele für geeignete Farbpigmente sind anorganische oder organische Pigmente, wie Metalloxide und Metallmischoxide, z.B. Eisenoxide.

Beispiele für Schwindreduzierer sind Polyole mit 2 bis 4 Hydroxygruppen, bevorzugt Glycerin und/oder Erythritol. Es hat sich herausgestellt, dass die Verwendung mindestens eines vorgenannten Polyols zu einer besonders großen Verringerung der Schwindung führen kann.

Die Mörtelzusammensetzung kann ferner Portlandzement enthalten, das ist aber im Allgemeinen nicht bevorzugt. Die Mörtelzusammensetzung kann z.B. bis zu 5 Gew.- %, bevorzugt nicht mehr als 3 Gew.-%, bevorzugter nicht mehr als 1 Gew.-%, insbesondere nicht mehr als etwa 0,1 Gew.-% an Portlandzement enthalten. Die Mörtelzusammensetzung ist aber bevorzugt frei von Portlandzement.

Die Mengen der einzelnen Bestandteile in der Mörtelzusammensetzung können auch von der Art der Applikation und der aufgetragenen Schichtdicke abhängen.

Eine vorteilhafte Ausführungsform der erfindungsgemäßen Mörtelzusammensetzung enthält
8 bis 20 Gew.-% des Aluminat-Bindemittels,
20 bis 50 Gew.-% des Calciumsulfat-Bindemittels,
35 bis 65 Gew.-% des oder der anorganischen Leichtfüllstoffe mit einer Rohdichte von weniger als 1,5 g/cm³, bevorzugt weniger als 1,0 g/cm³, insbesondere Blähglas,
4 bis 15 Gew.-% Füllstoff mit einer Rohdichte von mindestens 2,0 g/cm³, bevorzugt mindestens 2,2 g/cm³, insbesondere Sand, z.B. Quarzsand, und/oder Calciumcarbonat, z.B. Kreide und/oder Kalkstein,
0,01 bis 0,10 Gew.-% Weinsäuresalz, insbesondere Kaliumnatriumtartrat,
0,003 bis 0,5 Gew.-% Lithiumsalz, insbesondere Lithiumcarbonat oder Lithiumsulfat.

Die Erfindung betrifft ferner ein Verfahren zur Herstellung einer Bodenkonstruktion auf einem Substrat, umfassend
a) Aufbringen einer Mischung der erfindungsgemäßen Mörtelzusammensetzung wie vorstehend beschrieben mit Wasser auf das Substrat unter Bildung einer ersten Estrichlage,
b) Aufbringen einer Armierungslage auf die erste Estrichlage,
c) Aufbringen einer Mischung einer Ausgleichsmasse mit Wasser auf die Armierungslage unter Bildung einer zweiten Estrichlage und
d) gegebenenfalls Aufbringen eines Bodenbelags auf die zweite Estrichlage.

Die vorstehenden Angaben hinsichtlich der erfindungsgemäßen Mörtelzusammensetzung gelten in gleicher Weise hinsichtlich des erfindungsgemäßen Verfahrens.

Das erfindungsgemäße Verfahren betrifft die Herstellung einer Bodenkonstruktion auf einem Substrat bzw. einer Unterlage. Das Substrat unterliegt keinen Beschränkungen. Das erfindungsgemäße Verfahren eignet sich aufgrund der eingesetzten erfindungsgemäßen Mörtelzusammensetzung, mit denen eine Leichtschüttung erhalten werden kann, insbesondere für Substrate mit einer begrenzten Tragfähigkeit. Das erfindungsgemäße Verfahren eignet sich z.B. insbesondere für Bodensanierungen.

Beispiele für geeignete Substrate sind Substrate aus Holz, Beton, Estriche, Altuntergründe mit keramischen Belägen, Altuntergründe auf der Basis von Estrichen oder Beton. Das Substrat ist kann z.B. ein auf Zement, wie Portlandzement, oder auf Calciumsulfat basierendes Substrat sein. Das Substrat ist bevorzugt Holzsubstrat oder es ist ein mehrlagiges Substrat, das eine Holzlage umfasst, z.B. ein Unterboden aus Holz mit einem darauf befindlichen Altuntergrund.

Das Substrat kann gegebenenfalls vor dem Aufbringen der mit Wasser vermischten Mörtelzusammensetzung gemäß Schritt a) mit einer oder mehreren Grundierungen versehen werden. Die Grundierung wird dabei auf das Substrat aufgetragen, z.B. durch Aufstreichen. Eine solche Vorbehandlung ist dem Fachmann bekannt. Es können gängige Grundierungsmittel eingesetzt werden, z.B. Kunststoffdispersionen oder zweikomponentige Grundierungsmittel auf Basis organischer Bindemittel, z.B. Epoxidharzbindemittel. Als Grundierung eignen sich auch füllende Spachtelgrundierungen zum Grundieren und Füllen in einem Arbeitsgang. Das Substrat kann alternativ mit einer Trennschicht, z.B. einer PE-Folie versehen werden, wenn der Estrich als Fließestrich verlegt werden soll.

Im erfindungsgemäßen Verfahren wird in Schritt a) die erfindungsgemäße Mörtelzusammensetzung mit Wasser vermischt. Da die Mörtelzusammensetzung hydraulische Bindemittel in Form von Aluminat-Bindemittel und Calciumsulfat-Bindemittel enthält, finden nach der Zugabe von Wasser bekanntlich Hydratationsreaktionen statt. Durch Trocknen bzw. Abbinden findet mit der Zeit eine Aushärtung der Mörtelzusammensetzung statt. Die Aufbringung auf das gegebenenfalls grundierte Substrat erfolgt, wenn die Mörtelzusammensetzung noch fließfähig oder pastös ist.

Das Anmischen der erfindungsgemäßen zweikomponentigen Mörtelzusammensetzung aus einer Komponente A, die den Leichtfüllstoff umfasst, und einer Komponente B, die die restlichen Komponenten der Mörtelzusammensetzung umfasst, kann z.B. auf folgende Weise durchgeführt werden. Die Komponente B wird mit Wasser angemischt, z.B. für ca. 60 Sekunden. Geeignete Mischverhältnisse von Mörtelzusammensetzung (inklusive Leichtfüllstoff) und Wasser sind nachstehend angegeben. Es sollte zweckmäßigerweise kaltes, sauberes Wasser verwendet werden. Der erhaltenen homogenen Mischung wird bei laufendem Rührwerk die Komponente A (Leichtfüllstoff) zugeben und einige Zeit weiter gerührt, z.B. ca. 120 Sekunden, um die einsatzbereite Mischung zu erhalten. Es ist ebenfalls möglich, die mit Wasser angemischte Komponente B über die Komponente A (Leichtfüllstoff) zu kippen und diese Mischung dann nochmals zu mischen.

Die Konsistenz bzw. das rheologische Verhalten der Mörtelzusammensetzung kann neben der Wahl der eingesetzten Additive insbesondere auch durch das Mischverhältnis von Mörtelzusammensetzung und Wasser eingestellt werden. Es ist bevorzugt, die Mörtelzusammensetzung mit Wasser in einem Massenverhältnis von Wasser zu Mörtelzusammensetzung im Bereich von 0,08 bis 0,50, bevorzugt 0,10 bis 0,40, insbesondere 0,20 bis 0,35, zu mischen. Die erhaltene Mörtelzusammensetzung ist vorteilhafterweise pumpfähig, was den Transport erleichtert.

Die mit Wasser gemischte Mörtelzusammensetzung wird dann auf das gegebenenfalls mit einer Grundierung oder einer Trennschicht versehene Substrat aufgebracht. Die Aufbringung kann mit allen dem Fachmann bekannten Mitteln erfolgen, z.B. mittels Kelle, Rechen, Rakel oder Rolle, durch Gießen oder mittels Spritz- oder Sprühverfahren, bevorzugt mittels Kelle, Rakel, Gießen oder Rechen. Nach Auftrag kann die aufgebrachte Mörtelzusammensetzung gegebenenfalls geglättet werden, z.B. mit einer Glättkelle. Im Regelfall wird das aufgebrachte Material über eingebrachte Lehren abgezogen und anschließend mittels Glättkelle geglättet bzw. "verdichtet".

Nach dem Aufbringen der Mörtelzusammensetzung wird im Allgemeinen die Begehbarkeit der ersten Lage abgewartet, bevor das Armierungsgewebe aufgebracht wird. Bei der ersten Estrichlage handelt es sich insbesondere um eine Leichtschüttung.

Als Armierungslage können die auf dem Gebiet üblicherweise eingesetzten Armierungen bzw. Bewehrungen eingesetzt werden. Die Armierungslage ist oder umfasst bevorzugt einen textilen Flächenträger, z.B. ein Gewebe, ein Vlies oder ein Gelege. Bevorzugt sind von einem Vlies verschiedene Systeme, so dass die erste Estrichlage und die Ausgleichsschicht (zweite Estrichlage) sich miteinander verzahnen können. Mehr- bzw. dreidimensionale Gewebe oder Gelege, insbesondere aus Glasfasern, sind ebenfalls denkbar. Die Armierungslage ist oder umfasst bevorzugt ein Panzergewebe.

Die Armierungslage ist oder umfasst besonders bevorzugt einen textilen Flächenträger aus Glasfaser, z.B. als Gewebe, Vlies oder Gelege, insbesondere ein Glasfasergewebe oder Glasfasergelege. Die Glasfasern können kunststoffummantelt sein. Der textilen Flächenträger, z.B. als Gewebe, Vlies oder Gelege, kann auch aus einem anderen Fasermaterial gebildet sein, z.B. aus Polymerfasern.

Die Armierungslage wird vorzugsweise auf der ersten Estrichlage fixiert, z.B. mechanisch mittels Klammer und/oder mit einem Armierungsmörtel. Als Armierungsmörtel eignen sich insbesondere Calciumsulfatspachtelmassen auf Basis von Calciumsulfat-Bindemitteln. Das Calciumsulfat-Bindemittel der Calciumsulfatspachtelmasse ist insbesondere ausgewählt aus Calciumsulfat-Hemihydrat und/oder Calciumsulfat-Anhydrit entsprechend dem Calciumsulfat-Bindemittel der erfindungsgemäßen Mörtelzusammensetzung. Bevorzugt ist eine standfeste Spachtelmasse, insbesondere eine standfeste Calciumsulfatspachtelmasse, zu verwenden. Denkbar ist auch eine Spachtelmasse, die als Bindemittel Calciumsulfat-Bindemittel und Aluminat-Bindemittel umfasst, wobei die Definition dieser Bindemittel für die erfindungsgemäße Mörtelzusammensetzung beschrieben wurde.

Ein Vorteil des erfindungsgemäßen Verfahrens besteht darin, dass die erfindungsgemäße Mörtelzusammensetzung der ersten Estrichlage schnell trocknet, so dass nach einer relativ kurzen Trocknungsdauer, z.B. weniger als 6 Stunden, bevorzugt weniger als 4 Stunden, besonders bevorzugt nach nicht mehr als 2 Stunden, Wartezeit gemäß Schritt b) das Armierungsgewebe befestigt werden kann und anschließend nach lediglich weiterer kurzer Wartezeit, z.B. von ca. 30 min, mit Schritt c) fortgefahren werden kann, der Aufbringung der zweiten Estrichlage.

Gemäß Schritt c) des erfindungsgemäßen Verfahrens erfolgt das Aufbringen einer Mischung einer Ausgleichsmasse mit Wasser auf die Armierungslage unter Bildung einer zweiten Estrichlage. Es können die üblichen Auftragsverfahren verwendet werden. Beispiele sind vorstehend für die erste Estrichlage genannt. Die Ausgleichsmasse kann selbstverlaufend sein oder gegebenenfalls geglättet werden, z.B. mit einer Glättkelle.

Als Ausgleichsmasse werden insbesondere schnell härtende Systeme eingesetzt. Die Ausgleichsmasse ist bevorzugt eine Calciumsulfatspachtelmasse, umfassend ein Calciumsulfat-Bindemittel, wobei die Calciumsulfatspachtelmasse bevorzugt ein Calciumsulfat-Bindemittel und ein Aluminat-Bindemittel umfasst. Der Einsatz von solchen Calciumsulfatspachtelmassen ist bevorzugt, da zum einen eine schnelle Trocknung erfolgt und zum anderen eine vorherige Grundierung auf der erstellten ersten Estrichlage nicht erforderlich ist, was das Verfahren besonders wirtschaftlich und einfach macht.

Das Calciumsulfat-Bindemittel der Calciumsulfatspachtelmasse ist insbesondere ausgewählt aus Calciumsulfat-Hemihydrat und/oder Calciumsulfat-Anhydrit entsprechend dem Calciumsulfat-Bindemittel der erfindungsgemäßen Mörtelzusammensetzung, worauf verwiesen wird. Das Aluminat-Bindemittel der Calciumsulfatspachtelmasse, sofern vorhanden, ist insbesondere ausgewählt aus Calciumaluminatzement und/oder Calciumsulfoaluminatzement entsprechend dem Aluminat-Bindemittel der erfindungsgemäßen Mörtelzusammensetzung, worauf verwiesen wird. Die als Ausgleichsmasse eingesetzte Calciumsulfatspachtelmasse enthält im Allgemeinen keine Leichtfüllstoffe mit einer Rohdichte von weniger als 1,5 g/cm³, dafür einen höheren Anteil an üblichen Füllstoffen, z.B. Sand und/oder Calciumcarbonat.

Ein Vorteil der Bodenkonstruktion, die aus der ersten Estrichlage aus der erfindungsgemäßen Leichtschüttung, der Armierungslage und der zweiten Estrichlage gebildet ist, ist die schnelle Aushärtung, so dass spätestens 48 Stunden nach Aufbringung der zweiten Estrichlage, bevorzugt nach Aufbringung der ersten Lage, Belegreife erreicht wird. Dies bezieht sich auf eine durchgehende Bearbeitung unter Berücksichtigung der notwendigen Wartezeiten zur Trocknung. Es versteht sich, dass sich unter Berücksichtigung der Arbeitszeiten und des praktischen Ablaufs die Dauer verlängern kann.

Nach Erreichen der Belegreife kann gegebenenfalls und bevorzugt ein Bodenbelag auf die zweite Estrichlage aufgebracht werden. Es können übliche Bodenbeläge aufgebracht werden. Beispiele für Bodenbeläge sind Fliesen, Laminat, PVC (Polyvinylchlorid), Linoleum oder Teppich. Die Böden können auf übliche Weise auf der zweiten Estrichlage fixiert werden, z.B. durch Kleben.

Die Schichtdicken der Estrichlagen sind prinzipiell nicht beschränkt. Bei den folgenden Angaben beziehen sich die Schichtdicken auf die getrocknete Schicht.

Die erste Estrichlage kann z.B. eine Schichtdicke von mindestens 15 mm aufweisen, wobei die erste Estrichlage bevorzugt eine Schichtdicke im Bereich von 15 bis 100 mm, bevorzugter 20 bis 100 mm, aufweist. Die Schichtdicke kann auch davon abhängen, ob der Estrich als Verbundestrich oder Fließestrich verlegt wird. Bei Verlegung als Verbundestrich beträgt die Schichtdicke bevorzugt mindestens 15 mm, während bei Verlegung als Fließestrich die Schichtdicke bevorzugt mindestens 25 mm beträgt.

Die zweite Estrichlage kann z.B. eine Schichtdicke von mindestens 6 mm aufweisen, wobei die zweite Estrichlage bevorzugt eine Schichtdicke im Bereich von 6 bis 50 mm, bevorzugter 6 bis 10 mm, aufweist.

Eine bevorzugte Ausführungsform des erfindungsgemäßen Verfahrens für eine Bodenkonstruktion mit einem Verbundestrich umfasst
- Dispersionsgrundierung oder füllende Grundierung auf Unterbodenkonstruktion, insbesondere einem Holzsubstrat, z.B. Holzdielen,
- Aufbringen der erfindungsgemäßen Mörtelzusammensetzung als erste Estrichlage (Leichtschüttung) - bevorzugte Schichtdicke zwischen 15 und 100 mm, Trocknungszeit für die Aufbringung der Armierungslage weniger als 6 Stunden, z.B. bereits nach 2 Stunden (entspricht Zeit bis zur Begehbarkeit der ersten Estrichlage),
- Aufbringen von Panzergewebe bzw. Glasfasergewebe, fixiert mit Calciumsulfatspachtelmasse (z.B. standfeste Calciumsulfatspachtelmasse),
- Auftragen von Calciumsulfatspachtelmasse als Ausgleichsmasse für zweiten Estrichlage (z.B. schnellhärtende Feinspachtelmasse) - bevorzugte Schichtdicke zwischen 6 und 50 mm, aber insbesondere zwischen 6 und 10 mm; bereit für den endgültigen Bodenbelag spätestens nach 48 Stunden Eine bevorzugte Ausführungsform des erfindungsgemäßen Verfahrens für eine Bodenkonstruktion mit einem Fließestrich umfasst
- Auflegen von PE-Folie 100 µm auf Unterbodenkonstruktion (PE = Polyethylen),
- Aufbringen der erfindungsgemäßen Mörtelzusammensetzung als erste Estrichlage (Leichtschüttung) - bevorzugte Schichtdicke zwischen 25 und 100 mm, Trocknungszeit für die Aufbringung der Armierungslage weniger als 6 Stunden, z.B. bereits nach 2 Stunden,
- Aufbringen von Panzergewebe bzw. Glasfasergewebe (z.B. Schönox^{®} PZG), fixiert mit Calciumsulfatspachtelmasse (z.B. standfeste Calciumsulfatspachtelmasse),
- Auftragen von Calciumsulfatspachtelmasse als Ausgleichsmasse für zweiten Estrichlage (z.B. schnellhärtende Feinspachtelmasse) - bevorzugte Schichtdicke zwischen 6 und 50 mm, aber insbesondere zwischen 6 und 10 mm; bereit für den endgültigen Bodenbelag spätestens nach 48 Stunden

Die erfindungsgemäße Bodenkonstruktion ist bevorzugt eine Fußbodenkonstruktion, insbesondere für den Innenraumbereich. Besonders geeignet ist die Bodenkonstruktion für einen Fußboden von Wohnräumen oder Verkaufsflächen von Ladenlokalen oder auch für den gewerblichen Bereich.

Aufgrund des geringen Gewichts der erfindungsgemäßen Bodenkonstruktion eignet sie sich insbesondere für Unterbodenkonstruktionen bzw. Substrate mit geringer Tragfähigkeit. Bevorzugte Anwendungsfelder sind die Bodensanierung und/oder die Bodenkonstruktion auf Holzsubstraten oder Holzlagen umfassenden Substraten.

Die Erfindung betrifft auch die Verwendung der erfindungsgemäßen ein- oder zweikomponentigen Mörtelzusammensetzung wie vorstehend beschrieben als Estrich, insbesondere als Leichtschüttung.

Die vorstehenden Angaben hinsichtlich der erfindungsgemäßen Mörtelzusammensetzung und des erfindungsgemäßen Verfahrens gelten in gleicher Weise hinsichtlich der erfindungsgemäßen Verwendung, insbesondere hinsichtlich der Ausgestaltung der Mörtelzusammensetzung, der Bodenkonstruktion und des Substrats, so dass darauf verwiesen wird.

Die erfindungsgemäße Verwendung eignet sich bevorzugt zur Herstellung einer Bodenkonstruktion auf einem Substrat, umfassend in dieser Reihenfolge eine erste Estrichlage aus der erfindungsgemäßen ein- oder zweikomponentigen Mörtelzusammensetzung, eine Armierungslage und eine zweite Estrichlage, wobei gegebenenfalls über der zweiten Estrichlage ein Bodenbelag angeordnet wird.

Die erfindungsgemäße Verwendung eignet sich bevorzugt für die Fußbodensanierung bzw. Bodensanierung, da dort aufgrund der Tragfähigkeit der Unterbodenkonstruktion das Gewicht von Spachtelmassen oder Estrichen häufig begrenzt ist.

Die erfindungsgemäße Verwendung eignet sich bevorzugt für eine Unterbodenkonstruktion aus einem Holzsubstrat oder einem mehrlagigen Substrat, das eine Holzlage umfasst.

Die erfindungsgemäße Verwendung eignet sich insbesondere im Rahmen einer erfindungsgemäßen Bodenkonstruktion wie nachstehend beschrieben.

Die Erfindung betrifft auch eine Bodenkonstruktion auf einem Substrat, umfassend in dieser Reihenfolge eine erste Estrichlage aus der erfindungsgemäßen Mörtelzusammensetzung wie vorstehend beschrieben, eine Armierungslage und eine zweite Estrichlage, wobei gegebenenfalls über der zweiten Estrichlage ein Bodenbelag angeordnet ist.

Die vorstehenden Angaben hinsichtlich der erfindungsgemäßen Mörtelzusammensetzung, des erfindungsgemäßen Verfahrens und der erfindungsgemäßen Verwendung gelten in gleicher Weise hinsichtlich der erfindungsgemäßen Bodenkonstruktion, insbesondere hinsichtlich der Ausgestaltung der Mörtelzusammensetzung, der Armierungslage, der ersten und zweiten Estrichlage, des Bodenbelags und des Substrats, so dass darauf verwiesen wird.

Die Bodenkonstruktion ist bevorzugt nach einem erfindungsgemäßen Verfahren wie vorstehend beschrieben erhältlich.

Die Erfindung wird nachfolgend anhand von Ausführungsbeispielen näher erläutert. Die Beispiele dienen zur Veranschaulichung und sollen die vorliegende Erfindung in keiner Weise einschränken.

### Ausführungsbeispiele

### Beispiel 1

### Mörtelzusammensetzung

Es wurden eine zweikomponentige Mörtelzusammensetzung aus den Komponenten A und B gemäß den folgenden Formulierungen hergestellt.

### Komponente A

| | | Gew.-Teile |
|---|---|---|
| Calciumsulfoaluminat (i.tech ALI CEM GREEN) | Bindemittel | 23,78 |
| Alpha-Calciumsulfat-Halbhydrat | Bindemittel | 61,846 |
| CaCO₃, Korngröße: D50: 2.2 µm | Füllstoff | 12,282 |
| Calciumsulfat Dihydrat | | 1,307 |
| Vinylacetat-Ethylen-Copolymer, 98% Feststoff, Mindestfilmbildetemperatur 4 °C (DIN ISO 2115) | Redispersionspulver | 0,5 |
| Lithiumcarbonat | Beschleuniger | 0,014 |
| Kalium-Natrium-Tartrat | Verzögerer | 0,105 |
| Natriumglukonat Pulver | Verzögerer | 0,116 |
| Polycarboxylatether mit Polyethylenglykolseitenketten | Fließmittel | 0,05 |
| Summe | | 100 |

### Komponente B

| | | |
|---|---|---|
| Blähglas, Korngröße 2-4 mm, Rohdichte: etwa 0,32 g/cm³ | | 100 |

Die Komponente A und die Komponente B wurden in einem Verhältnis von 50 Gew.-% Komponente A und 50 Gew.-% Komponente B vermischt. Die erhaltene Mörtelzusammensetzung wies folgende Zusammensetzung auf.

### Mörtelzusammensetzung

| | | Gew.-Teile |
|---|---|---|
| Calciumsulfoaluminat (i.tech ALI CEM GREEN) | Bindemittel | 11,89 |
| Alpha-Calciumsulfat-Halbhydrat | Bindemittel | 30,922 |
| CaCO₃, Korngröße: D50: 2.2 µm | Füllstoff | 6,141 |
| Calciumsulfat Dihydrat | | 0,654 |
| Vinylacetat-Ethylen-Copolymer, 98% Feststoff, Mindestfilmbildetemperatur 4 °C (DIN ISO 2115) | Redispersionspulver | 0,25 |
| Lithiumcarbonat | Beschleuniger | 0,007 |
| Kalium-Natrium-Tartrat | Verzögerer | 0,053 |
| Natriumglukonat Pulver | Verzögerer | 0,058 |
| Polycarboxylatether mit Polyethylenglykolseitenketten | Fließmittel | 0,025 |
| Blähglas, Korngröße 2-4 mm, Rohdichte: etwa 0,32 g/cm³ | | 50 |
| Summe | | 100 |

### Beispiel 2 und Vergleichsbeispiel 1

Es wurde mit der Mörtelzusammensetzung von Beispiel 1 eine Bodenkonstruktion auf einem Gipskarton als Substrat (alternativ ein Betonsubstrat) auf folgende Weise hergestellt (Beispiel 2):
- Mischung von Mörtelzusammensetzung von Beispiel 1 mit Wasser (Verhältnis 100 kg Mörtelzusammensetzung / 16,4 I Wasser)
- Aufbringen der Mischung auf Substrat in der in Tabelle 1 angegebenen Schichtdicke
- Auflegen eines Panzergewebes (Glasfasergewebe) etwa 2 Stunden nach Aufbringen der Mischung und Fixieren mit Calciumsulfatspachtelmasse
- Aufbringen einer Ausgleichsmasse (Calciumsulfatspachtelmasse) auf das Gewebe nach ca. 2 Stunden, Schichtdicke ca. 8 mm

Es wurde mit einem im Handel erhältlichen zementbasierten Trockenmörtel für Leichtschüttungen (enthaltend Leichtzuschlag aus expandiertem Polystyrol) eine Bodenkonstruktion auf einem Gipskarton als Substrat auf folgende Weise hergestellt (Vergleichsbeispiel 1):
- Mischung von Trockenmörtel mit Wasser (Verhältnis 100 kg Trockenmörtel / 47,6-52,4 I Wasser)
- Aufbringen der Mischung auf Substrat in der in Tabelle 1 angegebenen Schichtdicke
- Auflegen eines Glasfaservlieses etwa 4 Stunden nach Aufbringen der Mischung
- Aufbringen eines zementären Dünnestrichs auf das Vlies nach ca. 48 Stunden, Schichtdicke ca. 8 mm

Die Eigenschaften der Bodenkonstruktionen gemäß Beispiel 2 und Vergleichsbeispiel 1 wurden getestet. Die Ergebnisse sind in Tabelle 1 gezeigt. Die Prüfungen erfolgten an der erfindungsgemäßen Mörtelzusammensetzung ("Schüttung" in Tabelle 1) oder an der ganzen Bodenkonstruktion ("System" in Tabelle 1).

Es wurden folgende Prüfverfahren eingesetzt:
Rohdichte: in Anlehnung an DIN EN 1015-10
Biegezug- / Druckfestigkeit: in Anlehnung an DIN EN 13892-2
Stuhlrollentester: in Anlehnung an ASTM C627
Haftzugfestigkeit: in Anlehnung an DIN EN 13892-8
Topfzeit 2: 20 min nach Vermischung der Mörtelzusammensetzung von Beispiel 2 bzw. des Trockenmörtels von Vergleichsbeispiel 1 mit Wasser wurde mit der Mischung alle 5 min eine kleine Fläche erstellt und am nächsten Tag mit einem Hammerschlag getestet. Wenn Fläche zerbröselt: Ende Topfzeit (TZ-Ende)

**Tabelle 1**

| **Prüfverfahren** | **Lagerung** | **Schüttung** | **System** | **Schichtdicke** | **Beispiel 2** | **Vergleichsbeispiel 1** | **Einheit** |
|---|---|---|---|---|---|---|---|
| **Topfzeit** | | | | | | | |
| | | | | | 45min | >240min | |

| **Trocknung** | | | | | | | |
|---|---|---|---|---|---|---|---|
| **Darrfeuchte 40°C** | 2h | x | | 20 mm | 7,7 | noch frisch | % |
| | 6h | x | | | 4,1 | 23,25 | % |
| | 1d | x | | | 0,75 | 13,6 | % |
| | 2d | x | | | 0,6 | 5,8 | % |
| | 2h | x | | 100 mm | 7,62 | noch frisch | % |
| | 6h | x | | | 5,92 | 29,14 | % |
| | 1d | x | | | 4,82 | 22,14 | % |
| | 2d | x | | | 4,38 | 18,42 | % |
| | 6h | | x | 32mm + 8mm (Prisma) | 4,41 | 8,43 | % |
| | 1d | | x | | 2,92 | 6,49 | % |
| | 7d | | x | | 0,82 | 3,2 | % |

| **Rohdichte (am Prisma bestimmt)** | | | | | | | |
|---|---|---|---|---|---|---|---|
| **Rohdichte** | 2h | x | | 40 mm | 0,41 | noch weich | kg/dm³ |
| | 6h | x | | | 0,41 | noch weich | kg/dm³ |
| | 1d | x | | | 0,41 | 0,35 | kg/dm³ |
| | 7d | x | | | 0,41 | 0,35 | kg/dm³ |
| | 28d | x | | | 0,41 | 0,35 | kg/dm³ |

| **Biegezug- / Druckfestigkeiten** | | | | | | | |
|---|---|---|---|---|---|---|---|
| **BZ/D Prisma** | 2h | x | | 40 mm | 0,22 / 0,89 | nicht messbar | N/mm² |
| | 6h | x | | | 0,41 / 1,33 | nicht messbar | N/mm² |
| | 1d | x | | | 0,59 / 1,81 | 0,15 / 0,28^{∗} | N/mm² |
| | 7d | x | | | 0,74/1,93 | 0,40 / 0,38 | N/mm² |
| | 28d | x | | | 0,71 / 1,90 | 0,43 / 0,42 | N/mm² |
| **BZ Prisma** | 6h | | x | 40mm | 1,2 | 0,4 | N/mm² |
| | 1d | | x | | 1,2 | 0,5 | N/mm² |
| | 7d | | x | | 1,3 | 0,7 | N/mm² |
| | 28d | | x | | 1,5 | 0,7 | N/mm² |

| **Stuhlrollentester in Anlehnung an ASTM C627** | | | | | | | |
|---|---|---|---|---|---|---|---|
| **Stuhlrollentester** | 2d | | x | 20 mm | Systemaufbauten waren resistent gegen die Einwirkung bis zur letzten Belastungsklasse. Einziger Unterschied war, dass bei Vgl.-bsp. 1 längere Wartezeiten bis zur Belastung einzuhalten waren. | | |
| | 7d | | x | | | | |
| | 2d | | x | 100 mm | | | |
| | 7d | | x | | | | |

| **Haftzugfestigkeit** | | | | | | | |
|---|---|---|---|---|---|---|---|
| **HZF gebohrt** | 1d | | x | 20mm+8mm | 0,38 Grenze Gewebe + im Estrich | 0,46 im Estrich | N/mm² |
| **HZF nicht gebohrt** | 1d | | x | | 0,81 Oberfläche + in SpMa | 0,93 Grenze Vlies | N/mm² |
| **HZF gebohrt** | 7d | | x | | 0,60 im Estrich | 0,49 im Estrich | N/mm² |
| **HZF nicht gebohrt** | 7d | | x | | 1,10 Oberfläche + in SpMa | 1,00 in SpMa | N/mm² |

| **Topfzeit 2** | | | | | | | |
|---|---|---|---|---|---|---|---|
| **TZ-Ende** | | x | | 20mm | 45 | >130 | min |

| | | | | | | | |
|---|---|---|---|---|---|---|---|
| * Prismen zu weich; SpMa = Spachtelmasse | | | | | | | |

## Patentansprüche

1. Ein- oder zweikomponentige Mörtelzusammensetzung, umfassend
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit,
iii) einen oder mehrere Füllstoffe mit einer Rohdichte von mindestens 2,0 g/cm³ und
iv) einen oder mehrere anorganische Leichtfüllstoffe mit einer Rohdichte von weniger als 1,5 g/cm³,
wobei die Menge an anorganischem Leichtfüllstoff mit einer Rohdichte von weniger als 1,5 g/cm³ 30 bis 70 Gew.-% beträgt und die Gesamtmenge an Aluminat-Bindemittel und Calciumsulfat-Bindemittel 20 bis 65 Gew.-% beträgt, wobei das Gewichtsverhältnis von Aluminat-Bindemittel zu Calciumsulfat-Bindemittel im Bereich von 1:1 bis 1:10 liegt, wobei sich die Gewichtsangaben auf das Trockengewicht der Mörtelzusammensetzung beziehen.

2. Ein- oder zweikomponentige Mörtelzusammensetzung nach Anspruch 1, wobei der Gehalt an anorganischem Leichtfüllstoff mit einer Rohdichte von weniger als 1,5 g/cm³ 35 bis 65 Gew.-%, bevorzugt 40 bis 60 Gew.-%, bezogen auf das Trockengewicht der Mörtelzusammensetzung, beträgt.

3. Ein- oder zweikomponentige Mörtelzusammensetzung nach einem der vorhergehenden Ansprüche, wobei der oder die anorganischen Leichtfüllstoffe mit einer Rohdichte von weniger als 1,5 g/cm³ ausgewählt sind aus Blähglas, Glashohlkugeln, Schaumglasschotter, Aluminiumsilikat-Hohlkugeln, Bims, Blähton, Blähschiefer, Blähperlit, recyclierter Gesteinskörnung, nicht geblähten Perliten, silikatischen Mikrohohlkugeln oder Kombinationen davon, wobei Blähglas, Bims, Blähperlit, Blähton, Blähschiefer oder Kombinationen davon bevorzugt sind.

4. Ein- oder zweikomponentige Mörtelzusammensetzung nach einem der vorhergehenden Ansprüche, wobei der oder die anorganischen Leichtfüllstoffe mit einer Rohdichte von weniger als 1,5 g/cm³, insbesondere Blähglas, eine mittlere Korngröße im Bereich von 0,05 bis 16 mm, bevorzugt 0,5 bis 10 mm, bevorzugter 1 bis 7 mm, besonders bevorzugt 2 bis 4 mm, aufweist.

5. Ein- oder zweikomponentige Mörtelzusammensetzung nach einem der vorhergehenden Ansprüche, wobei der Gehalt an Füllstoff mit einer Rohdichte von mindestens 2,0 g/cm³ 2 bis 20 Gew.-%, bevorzugt 4 bis 15 Gew.-%, bezogen auf das Trockengewicht der Mörtelzusammensetzung, beträgt.

6. Ein- oder zweikomponentige Mörtelzusammensetzung nach einem der vorhergehenden Ansprüche, wobei der oder die Füllstoffe mit einer Rohdichte von mindestens 2,0 g/cm³ Sand und/oder Calciumcarbonat, umfassen, wobei das Calciumcarbonat bevorzugt Kreide und/oder Kalksteinmehl ist.

7. Ein- oder zweikomponentige Mörtelzusammensetzung nach einem der vorhergehenden Ansprüche, wobei
die Gesamtmenge an Aluminat-Bindemittel und Calciumsulfat-Bindemittel 20 bis 60 Gew.-%, bevorzugt 35 bis 55 Gew.-%, bezogen auf das Trockengewicht der Mörtelzusammensetzung, beträgt, und/oder die Mörtelzusammensetzung ferner mindestens ein Additiv ausgewählt aus einem Lithiumsalz, mindestens einem Verzögerer ausgewählt aus Weinsäure oder einem Weinsäuresalz, einem Glukonat, insbesondere Natriumglukonat, und Zitronensäure oder einem Zitronensäuresalz, einem Fließmittel, bevorzugt einem Polycarboxylatether, oder einer Kombination davon umfasst.

8. Verwendung einer ein- oder zweikomponentigen Mörtelzusammensetzung nach einem der Ansprüche 1 bis 7 als Estrich, insbesondere als Leichtschüttung.

9. Verwendung nach Anspruch 8 zur Herstellung einer Bodenkonstruktion, umfassend in dieser Reihenfolge eine erste Estrichlage, insbesondere eine Leichtschüttungslage, aus der ein- oder zweikomponentigen Mörtelzusammensetzung nach einem der Ansprüche 1 bis 7, eine Armierungslage und eine zweite Estrichlage, wobei gegebenenfalls über der zweiten Estrichlage ein Bodenbelag angeordnet wird.

10. Verwendung nach Anspruch 8 oder 9 bei der Bodensanierung und/oder auf einem Holzsubstrat oder einem mehrlagigen Substrat, das eine Holzlage umfasst.

11. Verfahren zur Herstellung einer Bodenkonstruktion auf einem Substrat, umfassend
a) Aufbringen einer Mischung der Mörtelzusammensetzung nach einem der Ansprüche 1 bis 7 mit Wasser auf das Substrat unter Bildung einer ersten Estrichlage,
b) Aufbringen einer Armierungslage auf die erste Estrichlage,
c) Aufbringen einer Mischung einer Ausgleichsmasse mit Wasser auf die Armierungslage unter Bildung einer zweiten Estrichlage und
d) gegebenenfalls Aufbringen eines Bodenbelags auf die zweite Estrichlage.

12. Verfahren nach Anspruch 11, wobei
die Armierungslage einen textilen Flächenträger, insbesondere einen textilen Flächenträger aus Glasfaser, besonders bevorzugt ein Glasfasergewebe, umfasst, und/oder
die Ausgleichsmasse eine Calciumsulfatspachtelmasse ist, wobei die Calciumsulfatspachtelmasse ein Calciumsulfat-Bindemittel, bevorzugt ein Calciumsulfat-Bindemittel und ein Aluminat-Bindemittel, umfasst.

13. Verfahren nach Anspruch 11 oder 12, wobei
die erste Estrichlage eine Schichtdicke im Bereich von 15 bis 100 mm, bevorzugt 20 bis 100 mm, aufweist, und/oder
die zweite Estrichlage eine Schichtdicke im Bereich von 6 bis 50 mm, bevorzugt 6 bis 10 mm, aufweist.

14. Bodenkonstruktion auf einem Substrat, umfassend in dieser Reihenfolge eine erste Estrichlage aus der Mörtelzusammensetzung nach einem der Ansprüche 1 bis 7, eine Armierungslage und eine zweite Estrichlage, wobei gegebenenfalls über der zweiten Estrichlage ein Bodenbelag angeordnet ist.

15. Bodenkonstruktion nach Anspruch 14, erhältlich nach einem Verfahren nach einem der Ansprüche 11 bis 13.
